Europäisches Patentamt

European Patent Office

Office européen des brevets

(11) Veröffentlichungsnummer: **0 324 090 B1**

## EUROPÄISCHE PATENTSCHRIFT

(45) Veröffentlichungstag der Patentschrift: **23.09.92**

(21) Anmeldenummer: **88119756.0**

(22) Anmeldetag: **26.11.88**

(51) Int. Cl.⁵: **B65G 65/44**, G01G 13/08

(54) Vorrichtung zur Dosierung von schwer dosierbarem Schüttgut.

(30) Priorität: **12.01.88 DE 3800565**

(43) Veröffentlichungstag der Anmeldung:
**19.07.89 Patentblatt  89/29**

(45) Bekanntmachung des Hinweises auf die
Patenterteilung:
**23.09.92 Patentblatt  92/39**

(84) Benannte Vertragsstaaten:
**CH DE ES FR GB IT LI SE**

(56) Entgegenhaltungen:
**EP-A- 0 083 227**
**DE-A- 3 408 269**
**US-A- 4 475 671**

(73) Patentinhaber: **CARL SCHENCK AG**
**Landwehrstrasse 55 Postfach 40 18**
**W-6100 Darmstadt(DE)**

(72) Erfinder: **Törner, Ludger, Ing. grad.**
**Ketteler Strasse 23**
**W-6116 Eppertshausen(DE)**

(74) Vertreter: **Brandt, Ernst-Ulrich**
**Fa. Carl Schenck AG Patentabteilung Land-**
**wehrstrasse 55 Postfach 40 18**
**W-6100 Darmstadt 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Dosierung von schwer dosierbarem Schüttgut gemäß dem Oberbegriff des Patentanspruchs 1.

Als schwer dosierbare Schüttgüter sind neben faserigen Stoffen, wie Glasfasern oder Kohlefasern auch andere Stoffe und Stoffzusammensetzungen verschiedener Art bekannt (chemische Zwischen- und Fertigprodukte, Flocken, Schnitzel, Späne und dgl.). Bei solchen Schüttgütern ist ein konstanter und gleichmäßiger Materialfluß auf Fördervorrichtungen oft nicht erreichbar, weil sich durch Verhaken, Verklemmen, Verkleben usw. Materialanhäufungen bilden können, bzw. eine ungleichmäßige Belegung des Fördergerätes entsteht. Wenn diese Materialien dosiert aus einer Fördereinrichtung ausgetragen werden sollen, entstehen daher oft erhebliche Schwierigkeiten. Dies gilt auch für Schwingförderrinnen, bei denen das Schüttgut Schwingbewegungen ausgesetzt ist und in bekannter Weise durch Mikrowurfbewegungen gefördert wird.

Aus der die Gattung bildenden DE-OS 34 08 269 ist eine Vorrichtung zur kontinuierlichen Förderung und Ausrichtung von pflanzlichen Stoffen, vorzugsweise Tabakblättern, bekannt. Die Einrichtung besteht aus einem Einfüllschacht mit einer anschließenden Förderrutsche. Die Förderrutsche ist in Förderrichtung geneigt und wird von einem horizontal kreisenden Schwingantrieb kontinuierlich bewegt. Innerhalb des Einfüllschachtes sind rechenartig angeordnete Rundstäbe angebracht. Diese werden in bestimmten Intervallen, d. h. durchaus unstetig, vom Arbeitszylinder verschwenkt. Diese Teildrehung kann im Hinblick auf die Differenzwinkel ebenfalls unstetig erfolgen. Wird in den Einfüllschacht blattartiges Schüttgut eingebracht, so wird dieses durch die kreisenden horizontalen Bewegungen des Schachtes auf die gesamte Breite der Förderrutsche geleitet. In der Förderrutsche sind mehrere in Förderrichtung angeordnete Leitbleche befestigt, die den Schüttgutstrom entlang der Leitbleche in Förderrichtung lenken und dadurch gleichzeitig eine Ausrichtung der einzelnen Blätter des Schüttguts in Förderrichtung bewirken. Durch die horizontal kreisende Bewegung der Schwingrinne entsteht auf der Förderrutsche innerhalb des Schüttguts eine Scherwirkung, die die elastische Schüttgutschicht örtlich verdichten kann. Bei schwer dosierbarem faserartigem Schüttgut im Bereich des Schüttgutaustrags kann sich daher eine zusammenhängende Schicht ausbilden, die einen dosierten Schüttgutaustrag stark erschwert.

Die US 4,475,671 beschreibt eine Dosiereinrichtung, bei der aus einem Vorratsbehälter aus einem seitlichen Auslaßschlitz gekörntes Material austreten kann. Dazu ist am Auslaufschlitz ein horizontaler Vorsprung vorgesehen, der mit einem Schwingantrieb in Auslaufrichtung bewegbar ist. Oberhalb des Auslaufschlitzes ist ein zusätzliches rechenförmiges Schwingelement angeordnet, das ein Stocken des nachlaufenden körnigen Materials verhindern soll. Eine derartige Dosiereinrichtung ist für schwer dosierbare Schüttgüter nicht geeignet, da der schwingende Vorsprung keine Förderrinne darstellt, der die schwer dosierbaren Schüttgüter aus dem Vorratsbehälter austragen könnte.

Aus dem Firmenprospekt "Simplex-Dosierwaagen PAR", F9132-30.9 86B, der Firma Schenck, 6100 Darmstadt ist eine Differential-Dosierwaage bekannt, die auch zur Dosierung von schwer dosierbarem Schüttgut wie Glasfasern eingesetzt werden kann. Auf der Dosierwaage ist ein Vorratsbehälter für das Schüttgut sowie eine Förder- oder Dosierrinne angeordnet, die als Austragsvorrichtung aus dem Vorratsbehälter dient. Der Austrag aus der Dosierrinne wird mit Hilfe des Ausgangssignals der Differential- Dosierwaage gesteuert oder geregelt. Da sich die Glasfasern in der Dosierrinne trotz der schwingenden Anordnung nicht gleichmäßig verteilen, kommt es immer wieder zu Materialanhäufungen und Materiallücken, die dann einen gleichmäßigen Austrag bzw. eine gleichmäßige Dosierung der Glasfasern verhindern.

In der EP 0 083 227 B1 sind für unterschiedliche Förderer verschiedene Antriebe angegeben.

Es ist Aufgabe der vorliegenden Erfindung, eine Vorrichtung zur Dosierung von schwer dosierbarem Schüttgut, insbesondere faserigen Stoffen wie Glasfasern oder Kohlefasern, zu schaffen, die einen Vorratsbehälter, eine Dosierrinne und ein darin angeordnetes Rüttelelement aufweisen sowie einen gleichmäßigen, aufgelockerten Schüttgutstrom z. B. für eine gute Dosierung ermöglicht.

Diese Aufgabe wird durch die im Patentanspruch 1 angegebenen Merkmale gelöst.

Die weiteren Ansprüche betreffen zweckmäßige Ausgestaltungen der Erfindung.

Durch die offenbarte Lösung ergibt sich aufgrund des beweglichen, vom Boden unabhängig zu bewegenden Rüttelelementes am Austragsende der Dosierrinne ein völlig gleichmäßiger Schüttgutstrom mit konstanter Schichtstärke. Materialanhäufungen und Materiallücken werden vermieden, so daß eine einwandfreie und ungestörte Gutdosierung möglich ist. Die kurzzeitige Dosierkonstanz, d. h. gleichmäßige Dosierung innerhalb eines kurzen Zeitraums, wird erhöht. Die Erfindung erlaubt darüber hinaus, die Schütthöhe auf der Dosierrinne klein zu halten. Sie ist für faserige und andere schwer dosierbare Materialien geeignet.

Die Erfindung wird an einem Ausführungsbeispiel in den Zeichnungen dargestellt und in der Beschreibung näher erläutert. Es zeigen:

Fig. 1: Längsschnitt durch eine Vorrichtung zur Dosierung von Glasfasern,

Fig. 2: Vertikalschnitt A-A durch die Vorrichtung nach Fig. 1

Fig. 3: Draufsicht auf eine Dosierrinne mit Rüttelelementen.

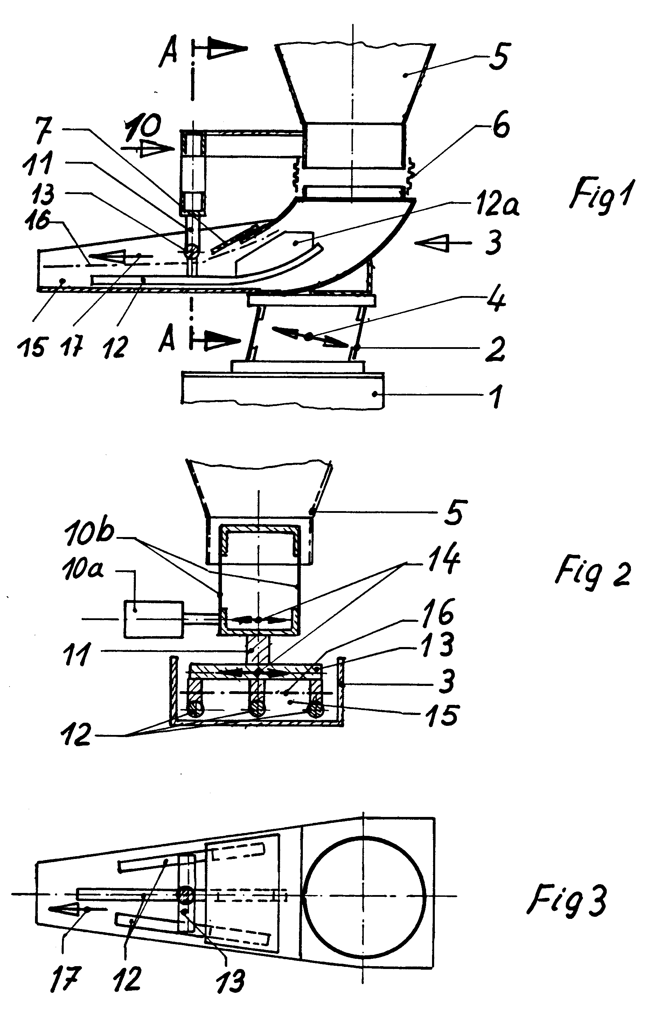

In Fig. 1 ist eine Differential-Dosierwaage 1 nur schematisch angedeutet. Auf der Dosierwaage 1 ist über einen nicht dargestellten Schwingantrieb mit Federabstützung 2 eine Dosierrinne 3 aufgebaut. Der Schwingantrieb erzeugt an der Dosierrinne 3 Schwingbewegungen in Richtung des Doppelpfeils 4.

Über der Dosierrinne 3 ist ein Vorratsbehälter 5 angeordnet. Der Vorratsbehälter ist über ein elastisches Verbindungselement 6 mit der Dosierrinne 3 verbunden und in nicht dargestellter Weise auf der Dosierwaage 1 abgestützt. In der Dosierrinne 3 ist ein Staublech 7 angeordnet, das die Höhe des Schüttgutstroms bzw. der Schüttgutschicht in der Dosierrinne bestimmt und das in seiner Neigung und Eintauchtiefe in das Schüttgut einstellbar ausgeführt sein kann. Die Gesamtanordnung von Differential-Dosierwaage, Dosierrinne und Vorratsbehälter ist bekannt, so daß sich die Angabe weiterer Einzelheiten erübrigt.

Die Erfindung ist auch bei Dosiervorrichtungen ohne die Differential-Dosierwaage, d. h. bei rein volumetrischer Dosierung verwendbar. In einem solchen Fall kann die Dosierrinne 3 fest z. B. auf einem Fundament aufgestellt werden. Die Dosierung erfolgt durch Steuerung der Dosierrinne 3 und/oder durch Staubleche oder ähnliche Einstellvorrichtungen.

Am Vorratsbehälter 5 ist ein Rüttelantrieb 10 angebaut, der aus einer Antriebseinheit 10a, z. B. einem pneumatischen Schwingungserreger, und einer Federanordnung 10b, die z. B. in Form von Parallellenkern ausgebildet sein kann, besteht. Das obere Ende der Federanordnung ist fest mit dem Vorratsbehälter 5 verbunden. Das untere Ende der Anordnung 10b weist ein Anschlußelement 11 auf, das mit Rüttelelementen 12 verbunden ist.

Im dargestellten Ausführungsbeispiel sind drei Rüttelelemente 12 vorgesehen, die über einen Querträger 13 miteinander verbunden sind. Die Rüttelelemente 12 erstrecken sich im wesentlichen in Längsrichtung der Dosierrinne 3 bzw. in Förderrichtung, wie aus Fig. 1 und 3 ersichtlich ist. Sie können z. B. stab- oder rohrförmig oder auch streifenförmig ausgebildet sein.

Der Rüttelantrieb 10a kann auch anders als dargestellt ausgebildet und z. B. auch ortsfest angeordnet sein. Wesentlich ist, daß der Rüttelantrieb an den im wesentlichen in Längsrichtung der Dosierrinne 3 verlaufenden Rüttelelementen 12 eine Querbewegung erzeugt, wie durch Doppelpfeile 14 angedeutet ist. Die Rüttelelemente 12 sind hierbei so angeordnet, daß sie sich in der Gutschicht 15 oder in der Oberfläche 16, (gestrichelte Linie in Fig. 1 und 2) der Gutschicht bewegen, d. h. entweder teilweise oder vollständig in die Gutschicht eingetaucht sind. Es kann auch zweckmäßig sein, die Rüttelelemente 12 in Bodennähe der Dosierrinne 3 anzuordnen. Der Rüttelantrieb (10) kann auch so ausgebildet sein, daß sich keine im wesentlichen gradlinige, sondern z. B. eine elyptische Bewegung in einer vertikalen oder horizontalen Ebene ergibt.

Die Form der Rüttelelemente 12 kann an die Form und Ausbildung der Dosierrinne 3 angepaßt sein. Z. B. können die Rüttelelemente einen im wesentlichen gleichen Abstand vom Boden der Dosierrinne aufweisen, wie in Fig. 1 angedeutet ist. Bei einer in der Draufsicht trapezförmig ausgebildeten Dosierrinne können die Rüttelelemente in Längsrichtung der Rinne leicht schräg zueinander angeordnet sein, wie in Fig. 3 dargestellt. Es ist zweckmäßig, die Rüttelemente im wesentlichen im mittleren Teil der Dosierrinne anzuordnen (siehe Fig. 1 und 3). Die einzelnen Rüttelelemente 12 können unterschiedlich lang sein (s. Fig. 3).

Die Rüttelelemente 12 können hinter dem Staublech 7, wie in Fig. 1 dargestellt, zusätzliche flächige oder stabförmige Elemente 12a aufweisen bzw. entsprechend ausgebildet sein. Eine solche Anordnung ist vorteilhaft, weil die Höhe des Schüttgutes in der Dosierrinne 3 vor dem Staublech 7 wesentlich größer ist als nach dem Staublech. Durch die Anordnung wird eine Auflokkerung in der Stauzone vor dem Staublech erreicht und eine Brücken- oder Trichterbildung des Schüttgutes in der Stauzone vermieden.

Im Betrieb der Vorrichtung nach der Erfindung ergibt sich durch die Überlagerung der Förderbewegung des Schüttgutes, die durch Pfeil 17 (Fig. 1) angegeben ist und die Querbewegung durch die Rüttelelemente 12 (Doppelpfeil 14) eine Vergleichmäßigung der in der Dosierrinne 3 befindlichen Schüttgutschicht und damit eine erheblich genauere Gutdosierung, insbesondere bei hohen Anforderungen an die Kurzzeitdosierkonstanz.

**Patentansprüche**

1. Vorrichtung zur Dosierung von schwer dosierbarem Schüttgut, insbesondere faserigen Stoffen wie Glasfasern oder Kohlefasern, die einen Vorratsbehälter (5) für das Schüttgut, ein Rüttelement (12), sowie eine dem Vorratsbehälter (5) nachgeschaltete und mit einem Schwingantrieb versehene Dosierrinne (3) aufweist, dadurch gekennzeichnet, daß das mindestens eine, sich innerhalb der Dosierrinne verlagernde Rüttelement (12) vom Rinnenboden beabstandet angeordnet ist, sowie sich relative zum Schwingbewegungen ausführenden Rinnenboden im wesentlichen quer zur Förderrichtung (17) bewegt und von einem als Rüttelantrieb (10a) ausgebildeten eigenen Antrieb kontinuierlich angetrieben wird.

2. Vorrichtung nach Anspruch 1, dadurch gekennzeichnet, daß das Schüttgut im mittleren Bereich der Dosierrinne (3) der zusätzlichen durch entsprechende Anordnung des Rüttelements Rüttelbewegung ausgesetzt ist.

3. Vorrichtung nach Anspruch 1 oder 2, dadurch gekennzeichnet, daß die Vorrichtung als Differential-Dosierwaage ausgebildet ist.

4. Vorrichtung nach Anspruch 3, dadurch gekennzeichnet, daß das mindestens eine Rüttelelement (12) aus mehreren, mit Abstand nebeneinander liegenden und miteinander verbundenen Elementen (12) besteht, die über ein gemeinsames Anschlußelement (11) mit dem Rüttelantrieb (10a) verbunden sind.

5. Vorrichtung nach Anspruch 4, dadurch gekennzeichnet, daß die Rüttelelemente (12) stab- oder rohrförmig ausgebildet sind.

6. Vorrichtung nach einem der Ansprüche 1 bis 5, dadurch gekennzeichnet, daß die Rüttelelemente (12) gleichen Abstand vom Boden der Dosierrinne (3) aufweisten.

7. Vorrichtung nach einem der Ansprüche 1 bis 6, dadurch gekennzeichnet, daß ein Staublech (7) von oben senkrecht oder schräg in die Dosierrinne (3) hineinragt und daß sich das mindestens eine Rüttelelement (12) unter dem Staublech (7) hindurch in den Aufgabebereich der Dosierrinne (3) hinein erstreckt.

8. Vorrichtung nach Anspruch 7, dadurch gekennzeichnet, daß das mindestens eine Rüttelelement (12) im Bereich der Aufgabe auf die Dosierrinne (3) an ihrer Oberseite zusätzliche in vertikaler Richtung angeordnete flächige oder stabförmige Elemente (12a) aufweist.

## Claims

1. A device for metering bulk goods which are difficult to meter, more particularly fibrous materials such as glass fibre or carbon fibre, which device has a supply container (5) for the bulk goods, a shaking element (12), and a metering channel (3) connected after the supply container (5) and provided with a vibrating drive, **characterised in that** the at least one shaking element (12) moving within the metering channel is arranged at a spacing from the base of the channel and moves substantially transverse to the direction of conveying (17) relative to the channel base which performs vibration movements and is driven continuously by its own drive formed as a shaking drive (10a).

2. A device according to claim 1, **characterised in that** the bulk goods are subject to the additional shaking movement, due to appropriate arrangement of the shaking element, in the centre region of the metering channel (3).

3. A device according to claim 1 or 2, **characterised in that** the device is formed as a differential metering scales.

4. A device according to claim 3, **characterised in that** the at least one shaking element (12) consists of several elements (12) lying adjacent each other at a spacing and connected together, which are connected via a common connection element (11) to the shaking drive (10a).

5. A device according to claim 4, **characterised in that** the shaking elements (12) are rod- or pipe-shaped.

6. A device according to any one of claims 1 to 5, **characterised in that** the shaking elements (12) have the same spacing from the base of the metering channel (3).

7. A device according to any one 1 to 6, **characterised in that** a retainer plate (7) projects from above perpendicularly or inclined into the metering channel (3) and that the at least one shaking element (12) extends below the retainer plate (7) through into the feed region of the metering channel (3).

8. A device according to claim 7, **characterised in that** the at least one shaking element (12) has additional large-area or rod-like elements (12a) arranged in a vertical direction in the region of the feed on to this metering channel (3) on its top face.

## Revendications

1. Dispositif pour le dosage de matières en vrac difficilement dosables, en particulier substances fibreuses, telles que fibres de verre ou fibres de carbone, qui présente un réservoir de réserve (5) pour le produit en vrac, un élément vibrant (12), ainsi qu'une goulotte de dosage (3), montée en aval du réservoir de réserve (5) et pourvue d'un entraînement vibrant, caractérisé en ce qu'au moins un élément vibrant (12), assurant la mise en mouvement de la goulotte de dosage, est disposé à distance du fond de goulotte, ainsi que déplacé, pratiquement transversalement par rapport à la direction de transport (17), vis-à-vis du fond de goulotte, qui effectue des mouvements vibrants, et entraîné de façon continue au moyen d'un entraînement propre, réalisé sous forme d'entraînement vibrant (10a).

2. Dispositif selon la revendication 1, caractérisé en ce que le produit en vrac est exposé, dans la zone centrale de la goulotte de dosage (3), au mouvement vibrant supplémentaire, provoqué par le dispositif correspondant de l'élément vibrant.

3. Dispositif selon la revendication 1 ou 2, caractérisé en ce que le dispositif est réalisé sous forme de balance de dosage différentielle.

4. Dispositif selon la revendication 3, caractérisé en ce que le au moins un élément vibrant (12) est composé de plusieurs éléments (12), placés à distance les uns des autres et reliés entre eux, en étant reliés à l'entraînement vibrant (10a) par l'intermédiaire d'un élément de raccordement (11) commun.

5. Dispositif selon la revendication 4, caractérisé en ce que les éléments vibrants (12) sont réalisés sous forme de barres ou de tubes.

6. Dispositif sel on l'une des revendications 1 à 5, caractérisé en ce que les éléments vibrants (12) présentent un espacement identique par rapport au fond de la goulotte de dosage (3).

7. Dispositif selon l'une des revendications 1 à 6, caractérisé en ce qu'une tôle de retenue (7) pénètre par le haut, verticalement ou inclinée dans la goulotte de dosage (3) et en ce que le au moins un élément vibrant (12) s'étend dans la zone de chargement de la goulotte de dosage (3), en passant sous la tôle de retenue (7).

8. Dispositif selon la revendication 7, caractérisé en ce que le au moins un élément vibrant (12) présente, dans la zone de chargement sur la goulotte de dosage (3), sur sa face supérieure, des éléments supplémentaires (12a), plat ou ayant la forme de barres, disposés verticalement.

Fig 1

Fig 2

Fig 3